# EUROPEAN PATENT APPLICATION

(11) **EP 1 032 229 A2**
(43) Date of publication of application: **30.08.2000**
(21) Application number: 00301499.0
(22) Date of filing: 25.02.2000
(51) Int. Cl.: H04Q 7/32, G06F 17/30

(54) **Radio apparatus and data reproducing apparatus**

(30) Priority: 26.02.1999 JP 5175199
(71) Applicant: Sony Corporation, Tokyo 141-0001 (JP)
(72) Inventor: Toshida, Mashiro, Shinagawa-ku, Tokyo (JP)
(74) Representative: Ayers, Martyn Lewis Stanley

(57) **Abstract**

The present invention relates to a radio apparatus capable of downloading predetermined data such as music data from a server such as a download site through a radio communication line. When this radio apparatus is downloading data from the server by connecting the line, if a recording medium loaded on a loading section of a recording and reproducing section of the radio apparatus reaches the end of its capacity so that predetermined data cannot be written completely in the recording medium, then the downloading is interrupted. Thereafter, when a new recording medium is loaded on the loading section, the radio apparatus resumes the downloading of remaining data of the above-mentioned predetermined data on the recording medium. In this case, identification data of the new recording medium 22 which will be loaded later on is written in the first recording medium as identification data of the following recording medium. When the downloading is interrupted, the predetermined data need not be downloaded on the new following recording medium over again from its beginning, and a useless blank can be avoided from being left on the recording medium, and a communication charge can be avoided from being wasted. Further, predetermined data such as moving picture data the capacity of which exceeds the recording capacity of the recording medium can be downloaded.

## Description

This invention relates to a radio apparatus and a data reproducing apparatus capable of downloading predetermined data such as music data from a download site through a radio communication line. More particularly, this invention relates to a radio apparatus in which a writing of predetermined data is interrupted when one recording medium loaded on a loading section reaches the end of its capacity so that the predetermined data cannot be fully written in one recording medium and then resumes the writing of remaining data of the predetermined data in other recording medium loaded on the loading section, thereby making it possible to efficiently download the predetermined data on a recording medium of a small capacity.

Heretofore, there is a radio apparatus such as a portable telephone capable of downloading music data from a download site through a radio communication line. In this case, the music data thus downloaded may be written in a detachable recording medium, for example, and reproduced therefrom after the downloading.

The above-mentioned radio apparatus may use a recording medium of a small capacity as the above-mentioned recording medium in accordance with the current in which radio apparatus become more and more compact in size and light in weight. As a result, it is frequently observed that the recording medium reaches the end of its recording capacity during music data of some music is being downloaded on the recording medium. Heretofore, such music data should be downloaded on a new recording medium from the beginning of music. In this case, a useless space is left on the recording medium, and a communication charge is wasted. Further, music data the capacity of which is in excess of the recording capacity of the recording medium cannot be downloaded on such recording medium.

According to an aspect of the present invention, there is provided a radio apparatus capable of downloading predetermined data from a download site through a radio communication line. This radio apparatus is comprised of data transmission request means for requesting the download site to transmit the predetermined data, data reception means for receiving the predetermined data transmitted from the download site, a loading section for loading a detachable recording medium and data recording means for sequentially writing the predetermined data received at the data reception means in a recording medium loaded on the loading section, wherein the data recording means interrupts the writing of the predetermined data when one recording medium currently loaded on the loading section reaches the end of its capacity so that the predetermined data cannot be completely written in the one recording medium, and then resumes the writing of remaining data of the predetermined data in other recording medium loaded on the loading section.

In the hereinafter described embodiment, the following feature are also employed.

When the writing on one recording medium is interrupted, there may be displayed a message for urging a user to load other recording medium. If other recording medium is loaded within a constant time after the interruption, then a line between the radio apparatus and the download site is not disconnected and the writing of remaining data is resumed. If other recording medium is not loaded within a constant time after the interruption, then the line between the radio apparatus and the download site is disconnected and the writing of the remaining data is resumed on other recording medium which will be loaded later on.

If the line between the radio apparatus and the download site is temporarily disconnected, then a telephone number of the download site, for example, and information of the predetermined data the writing of which was interrupted are memorized in a memory section and used to resume the downloading executed when other recording medium is loaded as described above. In this case, the telephone number of the download site is used to disconnect the line between the radio apparatus and the download site, and the predetermined data information (e.g. if such information is music data, then information indicative of title of music and time and position in and at which the writing was interrupted) is used as notifying information for requesting the download site to transmit only the remaining data of the predetermined data the writing of which was interrupted. Thus, the downloading of the above-mentioned remaining data can be resumed automatically.

Also, when the predetermined data is continuously written in other recording medium from one recording medium as described above, identification data of other recording medium may be written in one recording medium as identification data of a following recording medium. Thus, upon reproduction, for example, if the predetermined data is not fully written in one recording medium, then a recording medium in which remaining data is written can be easily distinguished by using the identification data of the following recording medium.

The recording medium includes a first information area to write therein at least its own identification data and a second information area to write therein identification data of the following recording medium in addition to a data area to write therein the predetermined data. For example, if one recording medium reaches the end of its capacity so that the predetermined data cannot be completely written therein, then the identification data of the following recording medium is selected and such identification data is written in the second information area of the one recording medium and written in the first information area of the other recording medium.

According to another aspect of the present invention, there is provided a data reproducing apparatus for reading out predetermined data from a detachable recording medium. This data reproducing apparatus is comprised of a loading section for loading the recording medium and data reproducing means for reading out the predetermined data from the recording medium loaded on the loading section, wherein the data reproducing means reads out halfway the predetermined data from the one recording medium and interrupts the reading if the predetermined data is written halfway in the one recording medium currently loaded on the loading section, and then resumes the reading of remaining data of the predetermined data from other recording medium if the other recording medium having its own identification data same as following recording medium information data written in the one recording medium is loaded on the loading section.

The hereinafter described embodiment of the present invention provides a radio apparatus and a data reproducing apparatus in which music data, or the like can be efficiently downloaded on a recording medium of a small capacity.

To allow better understanding, the following description of an embodiment of the present invention is given by way of non-limitative example with reference to the drawings, in which:
FIG. 1 is a block diagram showing an arrangement of a radio apparatus according to an embodiment of the present invention;
FIG. 2 is a diagram showing an arrangement of a data block of downloaded music data;
FIG. 3 is a diagram showing an arrangement of a recording medium;
FIG. 4 (formed of FIGS. 4A and 4B drawn on two sheets of drawings so as to permit the use of a suitably large scale) is a flowchart to which reference will be made in explaining the manner in which a control section controls a download processing:
FIG. 5 is a flowchart to which reference will be made in explaining the manner in which a control section controls a download resume processing.
FIG. 6 is a flowchart to which reference will be made in explaining the manner in which a control section controls a reproduction processing; and
FIG. 7 is a flowchart to which reference will be made in explaining the manner in which a control section controls a reproduction resume processing

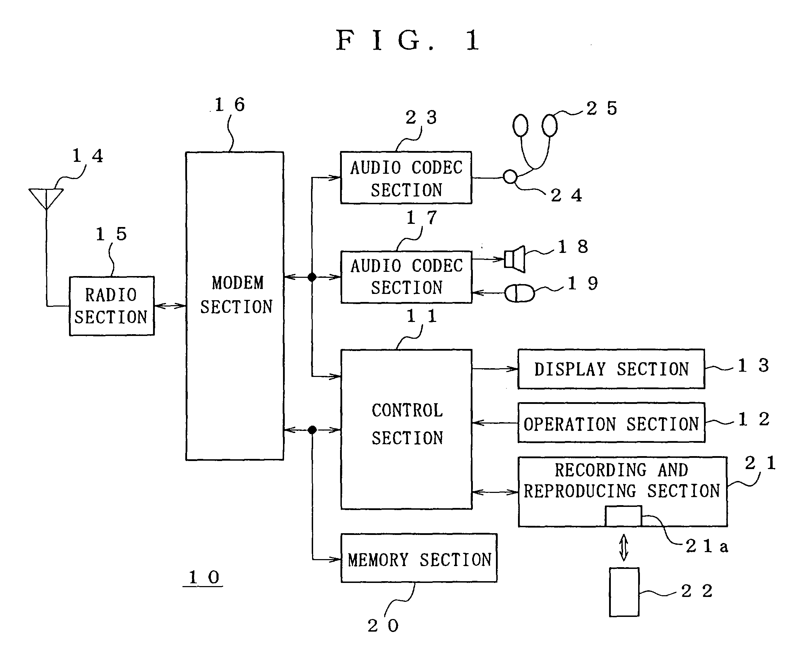

FIG. 1 of the accompanying drawings is a block diagram showing an arrangement of a radio apparatus 10 according to an embodiment of the present invention. This radio apparatus 10 may include a telephone function and a function to download music data of desired music from a download site.

The radio apparatus 10 may include a control section 11 having a computer to control an operation of the whole of the apparatus. This control section 11 may have connected thereto an operation section 12 having disposed therein ten-keys for enabling a user to execute a variety of operations and a display section 13 comprised of, for example, a liquid-crystal display (LCD), or the like to display operation commands to a user and the state of the apparatus, or the like.

Also, the radio apparatus 10 may include a transmission and reception antenna 12, a radio section 15 for obtaining a baseband reception signal by effecting a frequency-converting processing and an amplifying processing on an RF signal received at the antenna 12, obtaining an RF signal by effecting a frequency-converting processing and an amplifying processing on a baseband transmission signal generated from a modem section 16, which will be described later on, and the modem section 16 for obtaining reception data by demodulating the reception signal supplied from the radio section 15, extracting control data, audio data supplied to the control section 11 from this reception data and music data from the download site, obtaining transmission data from the control data of the control section 11 and audio data from an audio codec section 17, which will be described later on, and generating a baseband transmission signal by modulating this transmission data.

Also, the radio apparatus 10 may include the audio codec section 17 for obtaining a reception audio signal by effecting a decoding processing on audio data (compression-coded data such as ADPCM (adaptive differential pulse code modulation) extracted by the modem section 16, supplying this reception audio signal to a speaker 18 serving as a telephone receiver, obtaining audio data by effecting a compression-coding processing on a transmission audio signal from a microphone 19 serving as a telephone transmitter and supplying this audio data to the modem section 16. The audio codec section 17, the speaker 18 and the microphone 19 are sections concerning the telephone function.

Also, the radio apparatus 10 may include a memory section 20 formed of a non-volatile memory, or the like and a recording and reproducing section 21 in which music data extracted from the modem section 16 and supplied from the download site is written in the recording medium 22 and further music data is reproduced from the recording medium 22. The recording medium 22 may be a detachable IC memory, for example, and the recording and reproducing section 21 may include a loading section 2 la for loading the recording medium 22 thereon.

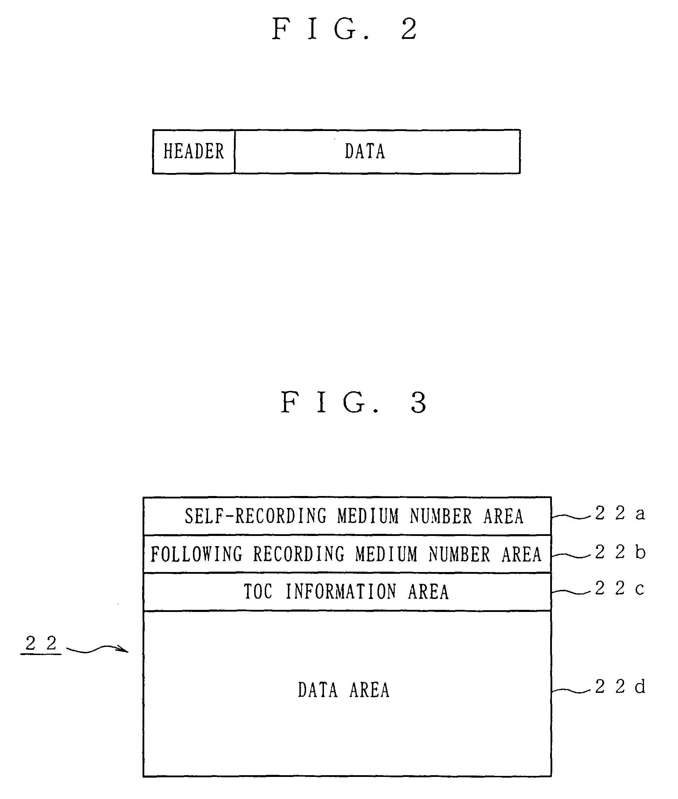

Music data from the download site may comprise a series of data blocks (data frames) each having a constant data length, for example. Each data block has an arrangement shown in FIG. 2, for example. That is, the data block may comprise a header portion and a data portion. Music data itself may be located in the data portion. The header portion may have disposed therein information concerning music data located at the data portion, time information indicating a title of music and the entire time of music, for example, and information indicative of time position of music data located in the data portion.

FIG. 3 shows an arrangement of the recording medium 22. That is, the recording medium 22 may include a data area 22d, a TOC (Table Of Contents) information area 22c for understanding the contents written in this data area 22d, an information area 22a to write therein self-identification data and an information area 22b to write therein following recording medium identification data. In this embodiment, identification data may be a recording medium number.

Referring back to FIG. 1, the radio apparatus 10 may include an audio codec section 23 for obtaining a reproduction audio signal by effecting a decoding processing on the above-mentioned music data (compression-coded data such as ATRAC) read out from the recording medium 22 and for supplying the reproduction audio signal to an output terminal 24. A headphone 25, for example, may be connected to the output terminal 24.

An operation of the radio apparatus 10 shown in FIG. 1 will be described below.

The manner in which a user makes a telephone communication by using the telephone function will be described in brief. In this case, when a user makes an outgoing call by the operation section 12, an outgoing call processing is executed under control of the control section 11, and a line between the radio apparatus 10 and the called person is established, thereby resulting in a telephone communication state being established. Also, when a user answers the incoming call by the operation section 12, the line between the radio apparatus 10 and the called person is established under control of the control section 11, thereby resulting in the telephone communication state being established. In the telephone conversation state, audio data of the called person extracted from the reception data by the modem section 16 is decoded by the audio codec section 17, and a resultant reception audio signal is supplied to the speaker 18. The transmission audio signal from the microphone 19 is compression-coded by the audio codec section 17, and resultant audio data is supplied to the modem section 16 and thereby transmitted to the called person.

An operation concerning a downloading of music data will be described. In this case, when a user calls the download site by the operation section 12, an outgoing call processing is executed under control of the control section 11, and a line is established between the radio apparatus 10 and the download site. In this state, music information transmitted from the download site may be displayed on the display section 13 under control of the control section 11. In this state, when a user selects a downloaded music by the operation section 12, such selection information may be transmitted from the control section 11 to the download site, and the downloading of music data of the selected music may be started.

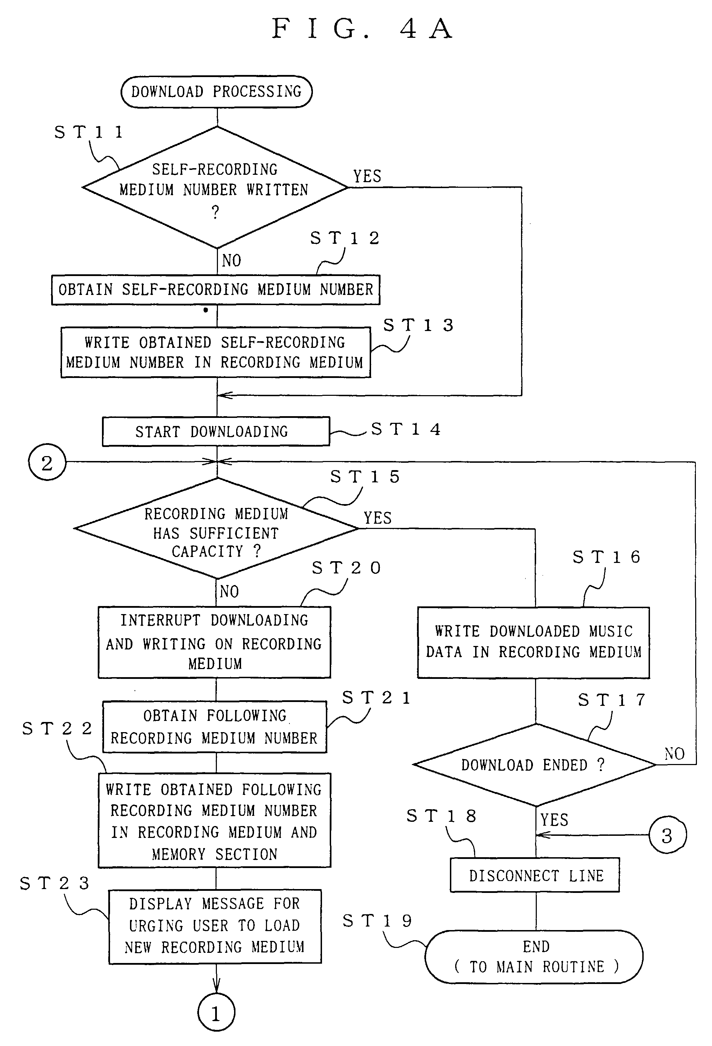

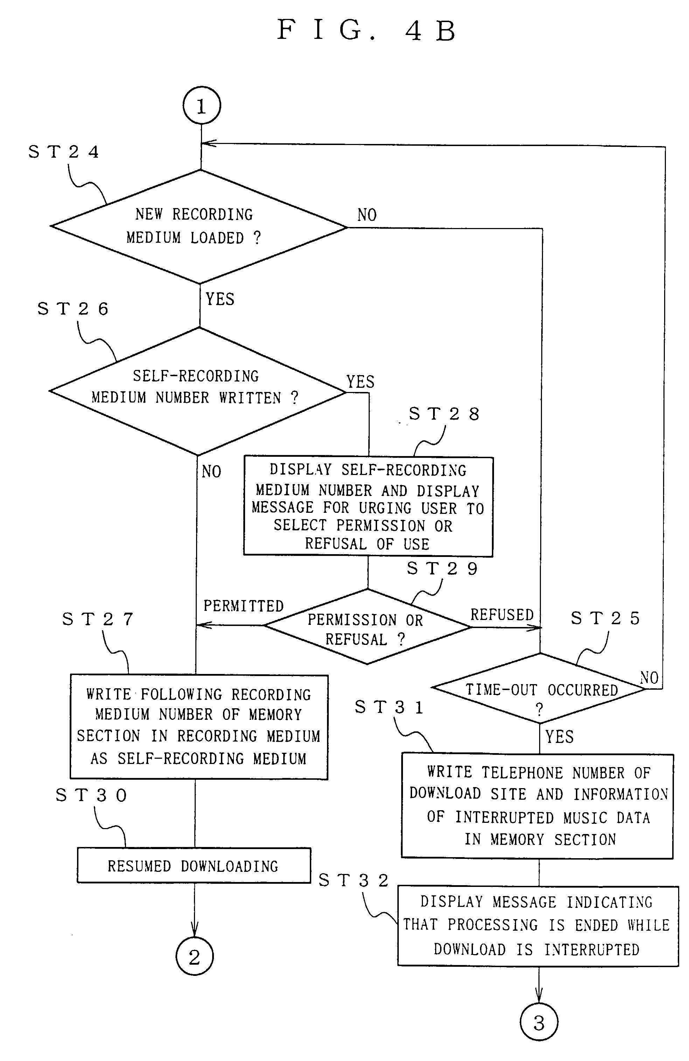

When the downloading may be started, music data extracted from the reception data by the modem section 16 may be supplied through the control section 11 to the recording and reproducing section 21 and thereby sequentially written in the data area of the recording medium 22. The manner in which the control section 11 controls the download processing will be described in detail with reference to a flowchart of FIG. 4 (formed of FIGS. 4A and 4B drawn on two sheets of drawings so as to permit the use of a suitably large scale).

Referring to FIG. 4A, when a user selects a downloaded music by the operation section 12, control goes to the next step ST11, whereat it is determined whether or not a self-recording medium number is recorded on the information area 22a of the recording medium 22 loaded on the loading section 2 la of the recording and reproducing section 21. If the recording medium 22 is a virgin recording medium so that the self-recording medium number is not written in the information area 22a as represented by a NO at the decision step ST11, then control goes to a step ST12. At the step ST12, a minimum virgin recording medium number is obtained as a self-recording medium number. Then, control goes to a step ST13, whereat the self-recording medium number thus obtained is written in the information area 22a, and then control goes to a step ST14. If on the other hand the self-recording medium number is already written in the information area 22a as represented by a YES at the decision step ST11, then control immediately goes to the step ST14. At the step ST14, the music selection information obtained by the user is transmitted to the download site, and the downloading is started.

Then, it is determined at the next decision step ST15 on the basis of the TOC information area 22c of the recording medium 22 whether or not the recording medium 22 has yet a sufficient recording capacity. If the recording medium 22 has a sufficient recording capacity as represented by a YES at the decision step ST15, then control goes to a step ST16, whereat downloaded music data extracted by the modem section 16 is supplied to the recording and reproducing section 21 and thereby sequentially recorded on the data area 22d of the recording medium 22. Then, it is determined at the next decision step ST17 whether or not the downloading is finished. The music data is continuously written in the above-mentioned recording medium 22 until the recording medium 22 has the sufficient recording capacity and the download is ended. If the downloading is ended as represented by a YES at the decision step ST17, then control goes to a step ST18, whereat a line between the radio apparatus 10 and the download site is disconnected. Then, the processing is ended at a step ST19.

If it is determined at the decision step ST15 that the recording medium 22 reaches the end of its recording capacity, then control goes to a step ST20, whereat the radio apparatus 10 may inform the download site of the interruption of the downloading, and the writing of music data in the recording medium 22 may be interrupted.

Then, control goes to a step ST21, whereat the minimum virgin recording medium number is obtained as a following recording medium number. Control goes to a step ST22, whereat the following recording medium number thus obtained is written in the information recording area 22b of the recording medium 22 and also written in the memory section 20. This following recording medium number may be used as the self-recording medium number, or the like of the recording medium 22 in which remaining data of the music data the writing of which was interrupted is written, as will be described later on. Then, control goes to a step ST23, whereat the display section 23 may display a message for urging a user to load a new recording medium 22 on the loading section 2 la of the recording and reproducing section 21.

Then, as shown in FIG. 4B, it is determined at a decision step ST24 whether or not the new recording medium 22 is loaded on the loading section 21a of the recording and reproducing section 21. If the new recording medium 22 is not loaded on the loading section 2 la as represented by a NO at the decision step ST24, then control goes to the next decision step ST25. It is determined at the decision step ST25 whether or not a constant time elapsed and a time-out occurred. If the new recording medium 22 is loaded on the loading section 21a before the time-out occurs as represented by a YES at the decision step ST24, then control goes to a decision step ST26. It is determined at the decision step ST26 whether or not the self-recording medium number is written in the information area 22a of that recording medium 22. If the recording medium 22 is the virgin recording medium and the self-recording medium number is not recorded on the information area 22a as represented by a NO at the decision step ST26, then control immediately goes to a step ST27.

If on the other hand the self-recording medium number is already written in the information area 22a as represented by a YES at the decision step ST26, then this recording medium 22 is the preformatted recording medium. Hence, control goes to a step ST28, whereat the display section 13 may display that self-recording medium number and a message for urging a user to select the permission or the refusal of use. Then, it is determined at a decision step ST29 whether the user selects the permission or the refusal. If the user selects the permission, then control goes to the step ST27. If the user select the refusal, then control goes to the decision step ST25.

At the step ST27, the following recording medium number that was written in the memory section 20 at the above-mentioned step ST22 is written in the information area 22a of the recording medium 22 as the self-recording medium number. Thus, the new recording medium 22 loaded on the loading section 21a of the recording and reproducing section 21 may be used to write remaining data of the music data the writing of which was interrupted as described above. Then, control goes to a step ST30, the radio apparatus 10 may inform the download site of the reopening of the downloading so that the download site may transmit the remaining data of the music data the writing of which was interrupted to the radio apparatus 10. Thereafter, control goes back to the step ST15 (FIG. 4A), whereat the remaining data of the interrupted music data extracted by the modem section 16 is written in the beginning of the data area 22d of the new recording medium 22.

Also, if it is determined at the step ST25 that the new recording medium 22 is not loaded on the loading section 21a within a constant time and a time-out occurs, then control goes to a step ST31, whereat the telephone number of the download site and the information of the interrupted music data are written in the memory section 20. Then, control goes to a step ST32, whereat the display section 13 may display a message indicating that the processing will be ended while the downloading is interrupted. Thereafter, control goes back to the step ST18, whereat the line between the radio apparatus and the download site is disconnected. Then, control goes to the step ST19, whereat the processing is ended.

The above-mentioned download site telephone number is used to establish the line between the radio apparatus 10 and the download site, as will be described later on. The information of the interrupted music data might be information such as a title of music and time and position in and at which the writing was interrupted. Only the remaining data of the music data the writing of which was interrupted may be used as notifying information transmitted from the download site.

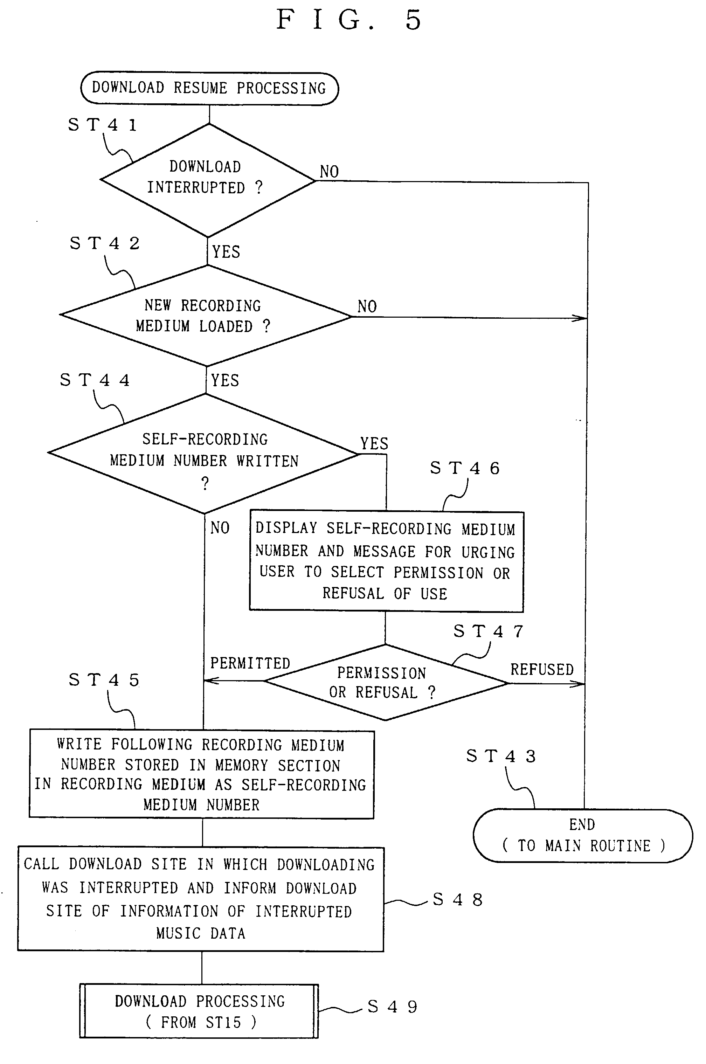

When the processing is ended while the downloading is interrupted as described above, the new recording medium 22 is loaded on the loading section 21a of the recording and reproducing section 21, thereby resuming the download processing. The manner in which the control section 11 controls the download resume processing will be described with reference to a flowchart of FIG. 5

Initially, referring to FIG. 5, it is determined at a decision step ST41 whether or not the downloading is interrupted. If the downloading is interrupted as represented by a YES at the decision step ST41, then control goes to the next decision step ST42. It is determined at the decision step ST42 whether or not the new recording medium 22 is loaded onto the loading section 21a of the recording and reproducing section 21. If the downloading is not interrupted as represented by a NO at the decision step ST41 and if the new recording medium 22 is not loaded on the loading section 2 la as represented by a NO at the decision step ST42, then control goes to a step ST43, whereat the processing is ended.

If it is determined at the step ST42 that the new recording medium 22 is loaded on the loading section, then control goes to the next decision step ST44. It is determined at the decision step ST44 whether or not the self-recording medium number is written in the information area 22a of the recording medium 22. If the recording medium 22 is the virgin recording medium as represented by a YES at the decision step ST42 and if the self-recording medium number is not written in the information area 22a as represented by a NO at the decision step ST44, then control immediately goes to a step ST45.

If on the other hand the self-recording medium number is already written in the information area 22a as represented by a YES at the decision step ST44, then such recording medium 22 is the preformatted recording medium. Then, control goes to a step ST46, whereat the display section 13 may display the self-recording medium number and a message for urging the user to select the permission or the refusal of use. Then, it is determined at a decision step ST47 whether the user selects the permission or the refusal. If the user selects the permission at the decision step ST47, then control goes to the step ST45. If the user selects the refusal at the decision step ST47, then control goes to the step ST43, whereat the processing is ended.

In the step ST45, the following recording medium number that was written in the memory section 20 at the step ST22 (FIG. 4A) of the above-mentioned download processing is written in the information area 22a of the recording medium 22 as the self-recording medium number. Thus, the new recording medium 22 loaded on the loading section 21a of the recording and reproducing section 21 may be used to write the remaining data of the music data the writing of which was interrupted as described above.

Then, control goes to a step ST48, whereat the user calls the download site in which the downloading is interrupted by using the download site telephone number that was written in the memory section 20 at the step ST31 (FIG. 4B) of the above-mentioned download processing to thereby establish the line between the radio apparatus 10 and the download site. Thereafter, the radio apparatus 10 may inform the download site of the information of the interrupted music data which was similarly written in the memory section 20 at the step ST31 so that the download site may transmit the remaining data of the music data the writing of which was interrupted.

Then, in a step ST49, the above-mentioned download processing (FIGS. 4A and 4B) is executed. However, in this download processing, control is started from the step ST15 (FIG. 4A), and the remaining data of the interrupted music data extracted by the modem section 16 is written in the beginning of the data area 22d of the new recording medium 22.

In this embodiment, the download processing and the download resume processing may be executed as described above. Therefore, when music data of some music from the download site cannot be written in a certain recording medium 22, such music data can be continuously written in the new recording medium 22 which will be loaded later on. Accordingly, the music data need not be downloaded over again in the new recording medium 22 from its starting portion, a useless space can be prevented from being left on the recording medium 22, and a communication charge can be avoided from being wasted. Further, music data the capacity of which exceeds the recording capacity of the recording medium 22 can be downloaded.

If the recording medium 22 loaded on the loading section 2 la of the recording and reproducing section 21 reaches the end of its capacity so that the downloading is interrupted and if the new recording medium 22 is not loaded within a constant time and a time-out occurs, the line between the radio apparatus 10 and the download site is disconnected, and the download processing is ended. At that very moment, if the download site telephone number and the information of the music data the writing of which was interrupted are written in the memory section 22, then when the new recording medium 22 is loaded on the loading section 2 la of the recording and reproducing section 21, the line between the radio apparatus and the download site may be automatically established by using the information such as the telephone number or the like written in the memory section 20 and the downloading can be resumed by the transmitted remaining data of the music data the writing of which was interrupted. Therefore, the user need not call the download site in which the downloading was interrupted and need not request the download site so that the download site may transmit the remaining data of the interrupted music data. Thus, the user can be avoided from being bothered by such troublesomeness.

Also, if music data of some music from the download site cannot be written in a certain recording medium 22 and can be continuously written in the recording medium 22 which will be loaded later on, the same self-recording medium number as the self-recording medium number written in the information area 22a of the recording medium 22 which will be loaded later on is written in the information area 22b of a certain recording medium 22 as the following recording medium number. Therefore, upon reproduction, when the music data is not completely written in a certain recording medium 22, the recording medium 22 in which the remaining data is written can be easily distinguished by using the following recording medium number written in the information area 22b.

The reproduction operation for reproducing music data of some music written in the recording medium 22 as described above will be described next. In this case, when the user operates the operation section 12, the recording contents of the recording medium 22 loaded on the loading section 2 la of the recording and reproducing section 21 may be displayed on the display section 13 under control of the control section 11. This display may be executed with reference to information on the TOC information area 22c of the recording medium 22. When the user selects a reproduced music by the operation section 12, under control of the control section 11, the recording and reproducing section 21 starts reading out music data of the selected music from the recording medium 22.

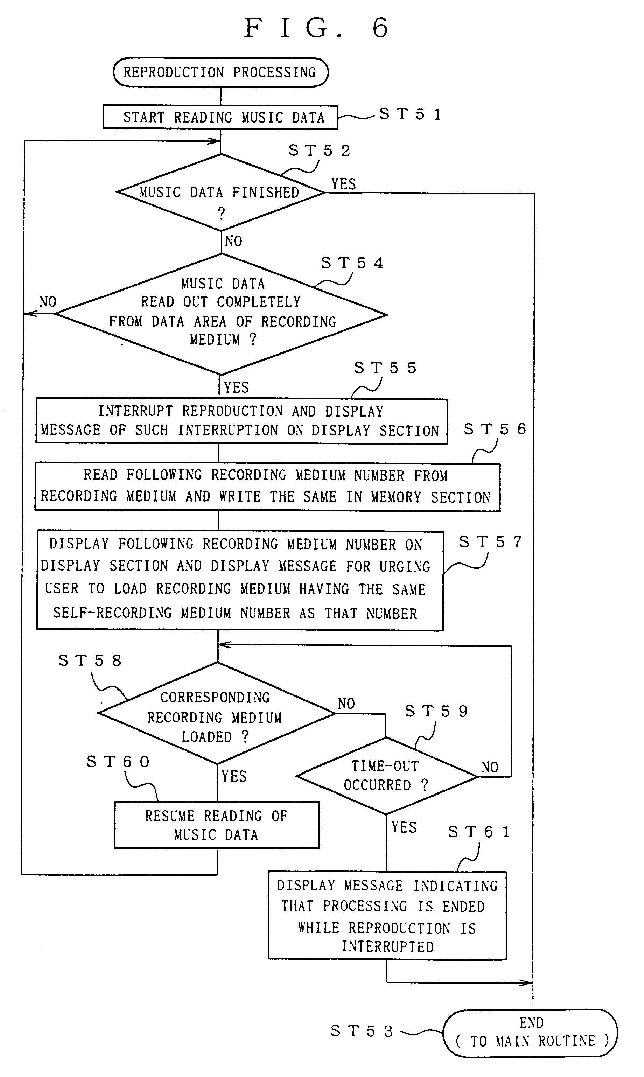

The music data read out from the recording and reproducing section 21 may be supplied through the control section 11 to the audio codec section 23. Then, this audio codec section 23 may output a reproduced audio signal by the decoding processing, and this reproduced audio signal may be supplied to the output terminal 24. Therefore, the user can listen to the selected music by connecting the headphone 25 to this output terminal 24. The manner in which the control section 11 controls the reproduction processing will be described in detail with reference to a flowchart of FIG. 6.

Referring to FIG. 6, when the user selects a reproduced music by the operation section 12, control goes to a step ST51, whereat the music data of the selected music is started to be read out from the recording medium 22 loaded on the loading section 21a of the recording and reproducing section 21. It is then determined at the next decision step ST52 whether or not the music data of the selected music is finished. If the music data is finished as represented by a YES at the decision step ST52, then control goes to a step ST53, whereat the processing is ended. If on the other hand the music data is not finished as represented by a NO at the decision step ST52, then control goes to the next decision step ST54. It is determined at the decision step ST54 whether or not the music data is completely read out from the data area 22d of the recording medium 22.

If the music data of the selected music is not ended as represented by a NO at the decision step ST52 and if the music data is completely read out from the data area 22d of the recording medium 22 as represented by a YES at the decision step ST54, then control goes to a step ST55. At the step ST55, the reading, i.e. reproduction of the music data is interrupted, and such message is displayed on the display section 13. Then, control goes to a step ST56, whereat the following recording medium number is read out from the information area 22b of the recording medium 22, and written in the memory section 20. Further, at a step ST57, the display section 13 may display the following recording medium number and displays a message for urging the user to load the recording medium 22 having the same self-recording medium number as that number. The remaining data of the music data written in the data area of a certain recording medium 22 is written in other recording medium 22 having the same self-recording medium number as the following recording medium number of a certain recording medium 22 as described in the above-mentioned download processing and download resume processing.

Then, control goes to the next decision step ST58. It is determined at the decision step ST58 whether or not the corresponding recording medium 22 is loaded on the loading section 2 la of the recording and reproducing section 21. If the corresponding recording medium 22 is not loaded on the loading section 21a as represented by a NO at the decision step ST58, then control goes to the next decision step ST59. It is determined at the decision step S59 whether or not a constant time elapsed and a time-out occurred. If the corresponding recording medium 22 is loaded on the loading section as represented by a YES at the decision step ST58 before the time-out occurs, then control goes to a step ST60. At the step ST60, the remaining data of the music data the writing of which was interrupted is started to be read out from the data area 22d of the corresponding recording medium 22, and control goes back to the step ST52. If on the other hand the time-out occurred as represented by a YES at the decision step ST59, then control goes to a step ST61. At the step ST61, the display 13 may display a message indicating that the processing will be ended while the reading, i.e. reproduction of the music data is interrupted. Thereafter, control goes to thestep ST53, whereat the processing is ended.

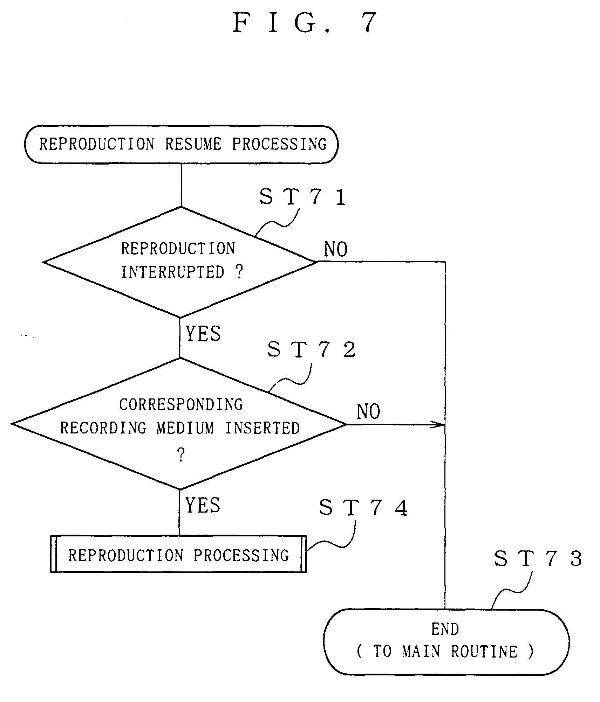

When the processing is ended while the reproduction is interrupted as described above, if the corresponding recording medium 22 is loaded on the loading section 21a of the recording and reproducing section 21, then the reproduction processing is resumed. The manner in which the control section 11 controls the reproduction resume processing will be described in detail with reference to a flowchart of FIG. 7.

Referring to FIG. 7, when the reproduction resume processing is started, control goes to the next decision step S71. It is determined at the decision step ST71 whether or not the reproduction is interrupted. If the reproduction is interrupted as represented by a YES at the decision step ST71, then control goes to the next decision step ST72. It is determined at the decision step ST72 whether or not the corresponding recording medium 22 is loaded on the loading section 2 la of the recording and reproducing section 21. If the reproduction, i.e. downloading is not interrupted as represented by a NO at the decision step ST71 and if the corresponding recording medium 22 is not loaded on the loading section 21a as represented by a NO at the decision step ST72, then control goes to a step ST73, whereat the processing is ended. If it is determined at the step ST72 that the corresponding recording medium 22 is loaded on the loading section 2 la, then control goes to a step ST74, whereat the above-mentioned reproduction processing (FIG. 6) is executed.

According to the embodiment of the present invention, the reproduction processing and the reproduction resume processing are executed as described above. Therefore, if the music data of some music is written halfway in the recording medium 22 loaded on the loading section 21a of the recording and reproducing section 21 so that the reproduction processing is interrupted and the recording medium (corresponding recording medium) in which the remaining data of that music data is written is loaded on the loading section within a constant time, then the reading of the remaining data is resumed from that recording medium, Also, if the corresponding recording medium 22 is not loaded on the loading section 21a within a constant time and a time-out occurred, then the reproduction processing is ended. Thereafter, if the corresponding recording medium 22 is loaded on the loading section 2 la of the recording and reproducing section 21, then the reading of the remaining data can be automatically resumed. Therefore, music data of some music continuously written in a plurality of recording media 22 can be reproduced continuously.

According to the embodiment of the present invention, if the music data of some music from the download site cannot be written in a certain recording medium 22 and can be continuously written in other recording medium 22 which will be loaded later on, then the virgin recording medium 22 or the preformatted recording medium 22 and the use of which was permitted by the user may be used as other recording medium 22. Alternatively, only the virgin recording medium 22 can be used, and further, other recording medium which will be loaded later on can be used regardless of the fact whether or not the recording medium is the virgin recording medium or the preformatted recording medium.

While the predetermined data downloaded and written in the data area 22d of the recording medium 22 is the music data as described above, the predetermined downloaded data is not limited to the music data. The present invention can be satisfactorily be applied to data, which is requested to be continuous, such as still picture data and moving picture data.

Having described a preferred embodiment of the invention with reference to the accompanying drawings, it is to be understood that the invention is not limited to that precise embodiment and that various changes and modifications could be effected therein by one skilled in the art without departing from the spirit or scope of the invention as defined in the appended claims.

## Claims

1. A radio apparatus capable of downloading predetermined data from a download site through a radio communication line, said radio apparatus comprising:
data transmission request means for requesting said download site to transmit said predetermined data;
data reception means for receiving said predetermined data transmitted from said download site;
a loading section for loading a detachable recording medium; and
data recording means for sequentially writing said predetermined data received at said data reception means in a recording medium loaded on said loading section, wherein said data recording means interrupts the writing of said predetermined data when one recording medium currently loaded on said loading section reaches the end of its capacity so that said predetermined data cannot be completely written in said one recording medium, and then resumes the writing of remaining data of said predetermined data in other recording medium loaded on said loading section.

2. A radio apparatus as claimed in claim 1, wherein said data recording means writes identification data of said other recording medium on said one recording medium as identification data of a following recording medium.

3. A radio apparatus as claimed in claim 2, wherein said recording medium includes a first information area to write therein at least its own identification data and a second information area to write therein identification data of said following recording medium in addition to a data area to write therein said predetermined data.

4. A radio apparatus as claimed in claim 3, wherein said data recording means acquires identification data of said following recording medium, writes said identification data in said second information area of said one recording medium and writes said identification data in said first information area of said other recording medium when said one recording medium reaches the end of its capacity so that said predetermined data cannot be completely written in said one recording medium.

5. A radio apparatus as claimed in claim 4, wherein said other recording medium is a virgin recording medium in which its own identification data is not written in said first information area.

6. A radio apparatus as claimed in claim 4, wherein said other recording medium is a preformatted recording medium in which its own identification data was already written in said first information area and said other recording medium is a recording medium the use of which as said other recording medium was permitted by a user.

7. A radio apparatus according to any one of the preceding claims, further comprising display means for displaying a message for urging a user to load said other recording medium when said one recording medium currently loaded on said loading section reaches the end of its capacity so that said predetermined data cannot be fully written in said one recording medium.

8. A radio apparatus according to any one of the preceding claims, further comprising data reproducing means for reading out said predetermined data from said recording medium loaded on said loading section and wherein said data reproducing means reads out halfway said predetermined data from one recording medium and interrupts the reading when said predetermined data is written halfway in said one recording medium currently loaded on said loading section, and then resumes the reading of remaining data of said predetermined data from other recording medium when said other recording medium having its own identification data same as identification data of a following recording medium written in said one recording medium is loaded on said loading section.

9. A radio apparatus for downloading predetermined data from a download site through a radio line, said radio apparatus comprising:
data transmission request means for requesting said download site to transmit said predetermined data;
data reception means for receiving said predetermined data transmitted from said download site;
a loading section for loading a detachable recording medium;
data recording means for sequentially writing said predetermined data received at said data reception means in a recording medium loaded on said loading section;
write interruption control means for controlling said data recording means to interrupt the writing of said predetermined data when one recording medium currently loaded on said loading section reaches the end of its capacity so that said predetermined data cannot be completely written in said one recording medium;
line disconnection means for disconnecting a line between said radio apparatus and said download site if other recording medium is not loaded on said loading section within a constant time after the writing of said predetermined data was interrupted;
memory means for memorizing a telephone number of said download site and information of said predetermined data the writing of which was interrupted;
line connection means for connecting a line between said radio apparatus and said download site by using said download site telephone number memorized in said memory means when said other recording medium is loaded on said loading section after said line was disconnected;
data resend request means for requesting said download site to transmit remaining data of said predetermined data the writing of which was interrupted by informing said download site of information of said predetermined data memorized in said memory means after said line was connected; and
writing resume control means for controlling said data recording means such that said recording means writes said remaining data received at said data reception means in said other recording medium.

10. A data reproducing apparatus for reading predetermined data from a detachable recording medium, said data reproducing apparatus comprising:
a loading section for loading said recording medium; and
data reproducing means for reading out said predetermined data from said recording medium loaded on said loading section, wherein said data reproducing means reads out halfway said predetermined data from said one recording medium and interrupts the reading when said predetermined data is written halfway in said one recording medium currently loaded on said loading section, and then resumes the reading of remaining data of said predetermined data from other recording medium when said other recording medium having its own identification data same as following recording medium information data written in said one recording medium is loaded on said loading section.

11. A data reproducing apparatus as claimed in claim 10, wherein said recording medium includes a first information area to write therein at least its own identification data and a second information area to write therein identification data of said following recording medium in addition to a data area to write therein said predetermined data.

12. A data reproducing apparatus according to claim 10 or 11, further comprising display means for displaying a message for urging a user to load said other recording medium after said data reproducing means read out halfway said predetermined data from said one recording medium in which said predetermined data was written halfway.

13. An apparatus as claimed in any one of the preceding claims , wherein said predetermined data is music data.

14. An apparatus as claimed in any one of the preceding claims, wherein said predetermined data is moving picture data.
